Europäisches Patentamt

European Patent Office

Office européen des brevets

(11) Publication number: **0 272 180**
**A2**

# EUROPEAN PATENT APPLICATION

(21) Application number: **87402742.8**

(22) Date of filing: **03.12.87**

(51) Int. Cl.4: **G01F 23/60**

(30) Priority: **15.12.86 IT 2267786**

(43) Date of publication of application:
**22.06.88 Bulletin 88/25**

(84) Designated Contracting States:
**DE FR GB SE**

(71) Applicant: **BENDIX ITALIA S.p.A.**
**Via Cavalli 53 A Casella Postale 66**
**I-26013 Crema(IT)**

(72) Inventor: **Cadeddu, Leonardo**
**Via Stazione 23**
**I-26013 Crema (CR)(IT)**

(74) Representative: **Timoney, Ian Charles Craig et al**
**Division Technique Service Brevets Bendix**
**Europe 126, rue de Stalingrad**
**F-93700 Drancy(FR)**

(54) **Level indicator for fluid reservoir.**

(57) A level indicator for a fluid reservoir comprising a body defining an opening therein, a stem slideably received in the opening, a float mounted at one end of the stem, a first electrical terminal means mounted on the body, a second electric terminal on the stem, the two electric terminal means being arranged to come into contact with each other when the stem and float are in a predetermined position relative to the body characterized in that the second electric terminal comprises an electrically conductive surface on the stem and the first electric terminal means is resiliently urged into contact with the stem.

## LEVEL INDICATOR FOR FLUID RESERVOIR

The present invention relates to a level indicator for a fluid reservoir and, more particularly, to a level indicator for a fluid reservoir in a hydraulic braking circuit of a vehicle.

It is important that a vehicle driver be warned if the level of hydraulic fluid in the reservoir falls below a predetermined safety level. In previously proposed arrangements the level indicator comprised a float intended to be immersed in the fluid in the reservoir and mounted at one end of a stem which was slideably received in the closure cap of the reservoir. A metallic disc was mounted on the stem and was arranged such that, at a predetermined fluid level, it would engage two electrical terminals mounted in the cap and so close an electric circuit and cause a warning light to signal the drop in fluid level to the driver.

Such an arrangement suffered from the drawback that the electrical contact between the metallic disc and the terminals was often poor. This arose from corrosion which built up on the metallic components and also from the relatively weak force with which the descending float caused the disc to engage the terminals.

It is therefore an object of the present invention to provide a level indicator for a fluid reservoir which is of simple construction and which ensures satisfactory electrical contact.

According to the present invention there is provided a level indicator for a fluid reservoir comprising a body defining an opening therein a stem slideably received in the opening, a float mounted at one end of the stem, a first electrical terminal means mounted on the body, a second electric terminal mounted on the stem, the two electric terminal means being arranged to come into contact with each other when the stem and float are in a predetermined position relative to the body characterised in that the second electric terminal comprises an electrically conductive surface on the stem and the first electric terminal means is resiliently urged into contact with the stem.

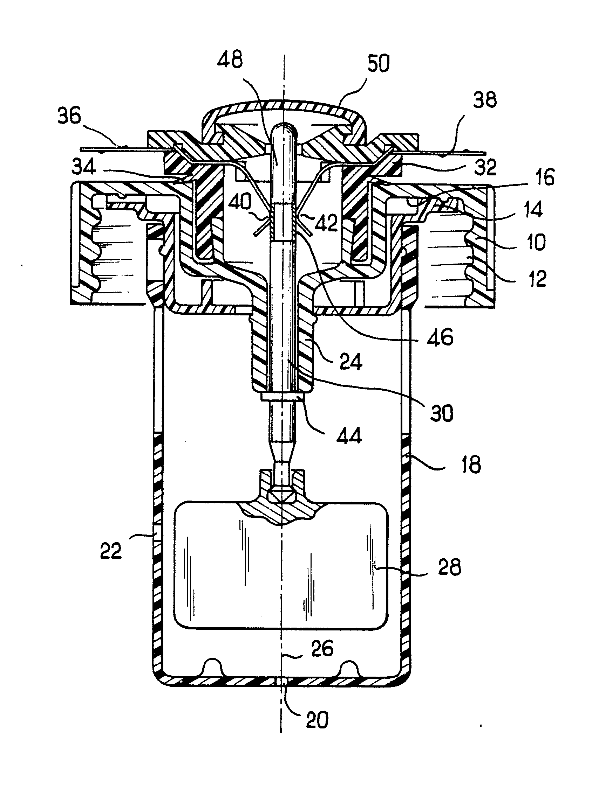

One embodiment of the invention will now be described by way of example with reference to the accompanying drawing in which the sole figure is a longitudinal section through a level indicator for a fluid reservoir according to the present invention.

As shown in the drawings the level indicator comprises a cap 10 having internal threads 12 by means of which the cap may be mounted on, and close, a fluid reservoir (not shown). A generally annular inner member 14 is fixed to an internal surface 16 of the cap 10 and supports a generally cylindrical float chamber 18. The float chamber 18, when the indicator is mounted on a fluid reservoir, projects vertically down into the reservoir and contains openings 20 and 22 to allow passage of the fluid into the interior of the float chamber 18.

The cap 10 comprises an integral annular guide sleeve 24 which is arranged generally coaxially with the longitudinal axis 26 of the float chamber 18, and projects through the inner member 14 into the float chamber 18. Within the float chamber 18 is arranged a generally cylindrical float 28 which is fixedly mounted at one end of a plastics stem 30 which is slideably received in an opening in the guide sleeve 24.

In accordance with the invention the level indicator further comprises a closure member 32 which is resiliently mounted on the cap 10 and sealed with respect thereto by an annular sealing lip 34. A pair of opposing terminals 36 and 38 are fixedly mounted in the closure member 32 and are formed from a resilient metal for example steel or phosphor bronze. The end 40,42 of each terminal 36,38 respectively, adjacent the stem 30 is in the form of a V with the rounded point of the V being resiliently urged into contact with the stem 30. The level indicator is illustrated in the "full" position which it adopts when the liquid in the reservoir is at its optimum level. In this position an annular flange 44 on the stem 30 abuts the end of the guide sleeve 24. A metallic sleeve 46 is mounted on a recess in the stem 30 in such a way that the outer surface of the sleeve 46 is flush with the surface of the stem 30. The sleeve 46 is located on the stem 30 such that when the level indicator is at or near its "full" position the ends 40,42 of the terminals 36,38 are in contact with the sleeve 46.

The terminals 36,38 are connected to an electrical warning circuit of the "normally closed" type which is arranged to switch on a warning light on the vehicle dashboard when the electric path between the terminals 36,38 is interrupted. Thus, when the float 28 and stem 30 of the level indicator are in their illustrated position corresponding to an optimum fluid level in the reservoir, both ends 40,42 of the terminals 36,38 are urged into contact with the sleeve 46 and the electrical circuit is thus closed resulting in the warning light being switched off. However, should the fluid level in the reservoir fall, for example due to leakage, then the float 28 and stem 30 will descend resulting in part of the upper, non-conductive part 48 of the stem 30 coming into contact with the ends 40,42 of the terminals 36,38 resulting in the opening of the electric circuit and the switching on of the warning light.

A flexible cover 50 is mounted on the closure member 32 to seal the assembly and allows the stem 30 to be depressed manually to test the warning circuit.

The axial length of the sleeve 46 is chosen so as to allow for minor variations in the fluid level which may arise while the vehicle is in use.

The present level indicator has the advantage that the contact force with which the terminals are urged against the sleeve 46 is increased as compared to previously proposed devices, due, in part, to the influence of sliding coefficient between the components. Furthermore, when the vehicle is in use there is always some movement of the stem 30 which results in a sliding contact between the ends 40,42 of the terminals 36,38 and the sleeve 46 which tends to considerably reduce the build-up of corrosion giving an improved and self-cleaning electrical contact.

It is envisaged that the level indicator could be adapted for use with a "normally open" electrical circuit by changing the relative position of the ends 40,42 and the sleeve 46 such that in the "full" position the ends would be in contact with a part of the stem 30 below the sleeve. Downward movement of the stem 30 would then bring the sleeve 46 into contact with the ends 40,42.

The terminals 36,38 are preferably disposed diametrically opposite each other although other relative positions may be envisaged.

It is envisaged that the sleeve 46 could be replaced by an integral part of the stem 30 which is electrically conductive.

## Claims

1. A level indicator for a fluid reservoir comprising a body (10) defining an opening therein, a stem (30) slideably received in the opening, a float (28) mounted at one end of the stem (30), a first electrical terminal means (36,38) mounted on the body (10), a second electric terminal (46) on the stem (30), the two electric terminal means (36,38 ; 46) being arranged to come into contact with each other when the stem (30) and float (28) are in a predetermined position relative to the body (10) characterized in that the second electric terminal (46) comprises an electrically conductive surface (46) on the stem (30) and the first electric terminal means (36,38) is resiliently urged into contact with the stem.

2. Level indicator as claimed in claim 1 characterised in that the electrically conductive surface (46) comprises a sleeve (46) mounted on the stem (30).

3. Level indicator as claimed in claim 2, characterised in that the first electrical terminal means (36,38) comprises two electrical terminals (36,38) having respective ends (40,42) arranged adjacent each other and adjacent the stem (30) such that, at a given position of the stem (30), the sleeve (46) provides an electrical contact between the two terminals (36,38).

4. Level indicator as claimed in claim 3, characterised in that the ends (40,42) of the terminals (36,38) are generally V-shaped and have a rounded point which is urged into contact with the stem (30).

5. Level indicator as claimed in claim 4, characterised in that the external surface of the sleeve (46) is flush with the external surface of the stem (30).

6. Level indicator as claimed in claim 3,4 or 5 characterised in that the terminals (36,38) are arranged on opposite sides of the stem (30)

7. Level indicator as claimed in claim 1 characterised in that the electrically conductive surface (46) comprises an integral part of the stem (30).